## Europäisches Patentamt
## European Patent Office
## Office européen des brevets

(19)

(11) Numéro de publication: **0 064 440**
**A2**

(12) # DEMANDE DE BREVET EUROPEEN

(21) Numéro de dépôt: **82400704.1**

(22) Date de dépôt: **20.04.82**

(51) Int. Cl.³: **F 03 D 3/02**

(30) Priorité: **23.04.81 FR 8108134**

(43) Date de publication de la demande:
**10.11.82 Bulletin 82/45**

(84) Etats contractants désignés:
**AT BE CH DE FR GB IT LI LU NL SE**

(71) Demandeur: **Berger, Michel**
**7 Clos les Montorelles**
**F-34140 Meze(FR)**

(72) Inventeur: **Berger, Michel**
**7 Clos les Montorelles**
**F-34140 Meze(FR)**

(74) Mandataire: **Combe, André et al,**
**CABINET BEAU DE LOMENIE 55 rue d'Amsterdam**
**F-75008 Paris(FR)**

(54) Aérogénérateur à axe vertical à double rotor et à flux canalisé.

(57) La présente invention concerne un aérogénérateur orientable formé de deux rotors (6,7) ) à axes parallèles verticaux, tournant en sens inverse et disposés côte à côte, chaque rotor étant constitué de pales périphériques (8) reliées à l'axe de rotation dudit rotor par des bras ou entretoises (9, 10,) lesdites pales étant convenablement profilées et lesdits rotors étant positionnés de façon qu'au cours de la rotation chaque ensemble bras-pale d'un rotor s'intercale entre deux systèmes bras-pales de l'autre rotor, ledit aérogénérateur étant caractérisé en ce que la surface frontale de l'aérogénérateur située au droit des deux axes parallèles des rotors est constituée par un fuselage profilé (18) formé de deux coquilles symétriques ouvrantes.

Fig. 2

Aérogénérateur à axe vertical à double rotor et à flux canalisé.

La présente invention concerne un aérogénérateur à axe vertical, à double rotor et à flux canalisé.

Les éoliennes (dispositifs captant l'énergie du vent pour la transformer en énergie mécanique ou électrique utilisable) sont connues. Parmi les divers types d'éoliennes, on a déjà préconisé des éoliennes comportant deux rotors à axes verticaux parallèles; de tels engins sont décrits par exemple dans les brevets des Etats-Unis d'Amérique 1 413 411 et français 2 449 208.

Les engins de ce type ne sont intéressants que dans la mesure où l'on peut utiliser au mieux la force du vent, celle-ci devant s'exercer positivement sur les pales convenablement orientées mais ne devant pas freiner ces mêmes pales lorsqu'elles ont fait un demi-tour. On a déjà préconisé pour cela de masquer par des masques, en forme de cylindres à section triangulaire ou en portions de cercles, les pales lors de leur trajet contre le sens du vent. Une telle solution n'est pas souhaitable parce que, d'une part, on ne peut récupérer ainsi la force maximale des vents et, d'autre part, les formes triangulaires ou hémicirculaires induisent dans les courants du vent des tourbillons peu souhaitables.

La présente invention vise à résoudre cette difficulté en permettant l'utilisation optimale de la force du vent agissant sur toute la surface frontale de l'éolienne.

Une autre difficulté rencontrée provient du contrôle nécessaire de la vitesse de rotation des parties tournantes de l'éolienne lorsque la vitesse du vent devient trop importante. Cette difficulté n'est pas évoquée ni bien évidemment résolue dans les dispositifs connus.

Un des buts de la présente invention vise à résoudre ce problème.

L'invention concerne donc un aérogénérateur orientable par rotation autour d'un axe azimutal, formé de deux rotors à axes parallèles verticaux tournant en sens inverse et disposés côte à côte, chaque rotor étant constitué de pales périphériques reliées à l'axe de rotation dudit rotor par des bras ou entretoises, lesdites pales étant convenablement profilées et lesdits rotors étant positionnés de façon qu'au cours de leur rotation chaque ensemble bras-pale d'un rotor s'intercale entre deux systèmes bras-pales de l'autre rotor, ledit aérogénérateur étant caractérisé en ce que sa surface frontale, située au droit des deux axes parallèles des rotors, est constituée par un fuselage profilé formé de deux coquilles symétriques ouvrantes.

Ce que l'on appelle la surface frontale de l'aérogénérateur est la surface parallèle au plan formé par les deux axes des rotors limitée par la largeur totale et la hauteur totale de l'appareil. Le fuselage profilé sera disposé sur la portion de cette surface frontale disposée au centre de cette surface et dont la largeur sera égale à l'écartement entre les deux axes des rotors.

Le mot profilé est utilisé selon le sens qui lui est connu en aérodynamisme. C'est-à-dire que la surface externe du fuselage sera conçue et calculée de façon que les filets d'air frappant cette surface soient déviés le long de celle-ci sans création de tourbillons mais avec accélération de la vitesse d'écoulement linéaire de cet air. Ce type de surface est parfaitement connu et calculable notamment dans l'industrie aéronautique.

Le fuselage profilé est symétrique par rapport au plan médian perpendiculaire au plan formé par les axes parallèles des deux rotors; il est formé de deux coquilles qui peuvent s'ouvrir par pivotement autour d'un axe qui peut être :

- soit pour chaque coquille un axe confondu avec l'axe de rotation des rotors, auquel cas l'ouverture des coquilles provoque un freinage par admission d'air sur le chemin de retour des pales;
- soit situé à l'extrémité des deux coquilles, auquel cas l'ouverture diminue la course pendant laquelle chaque pale est soumise à l'influence du vent.

Ce dispositif d'ouverture est essentiel dans la mesure où il permet de contrôler aisément la vitesse de rotation des rotors en fonction de la vitesse du vent. Le dispositif de l'invention réalise donc l'optimisation de l'utilisation des vents faibles et moyens (coquilles fermées) et des vents forts (ouverture progressive des coquilles).

L'ensemble des deux rotors est monté pivotant sur un axe, de sorte que l'aérogénérateur peut être orienté de façon que la pointe du fuselage profilé soit toujours face au vent. On remarquera que le fait même que l'on utilise un fuselage profilé implique que l'appareil s'oriente de lui-même face au vent. On peut améliorer cette disposition naturelle en disposant, sur la partie de l'appareil opposée à celle portant le fuselage profilé, un carénage convenable. Par un choix judicieux de la forme de ce carénage "arrière", on facilitera, d'une part, l'orientation optimale de l'appareil et, d'autre part, l'écoulement de l'air lorsque celui-ci, après avoir agi sur les pales, s'échappera. On évite ainsi les tourbillons de l'air que l'on a parfois cherché à utiliser pour surmonter les difficultés rencontrées dans l'utilisation des aéro-générateurs de ce type.

En fonctionnement, l'énergie transmise sur les axes des rotors peut être récupérée par tous moyens connus. Un des moyens particulièrement intéressant consiste à disposer d'une courroie croisée (de façon que les deux rotors tournant en sens inverse additionnent leur force dans un même sens de rotation sur un axe récepteur) qui entraîne un axe entraînant lui-même un alternateur. Cet axe (dont l'alternateur) se trouve avantageusement positionné au-dessous des rotors et exactement au milieu des axes de ces deux rotors (cet axe est donc confondu avec l'axe de rotation de l'aérogénérateur).

L'exemple non limitatif ci-après illustre l'invention, cet exemple est représenté schématiquement sur les figures 1, 2 et 3. La figure 1 est une vue en perspective d'un aérogénérateur selon l'invention, les figures 2 et 3 sont respectivement des vues de dessus et en élévation-coupe de ce même aérogénérateur.

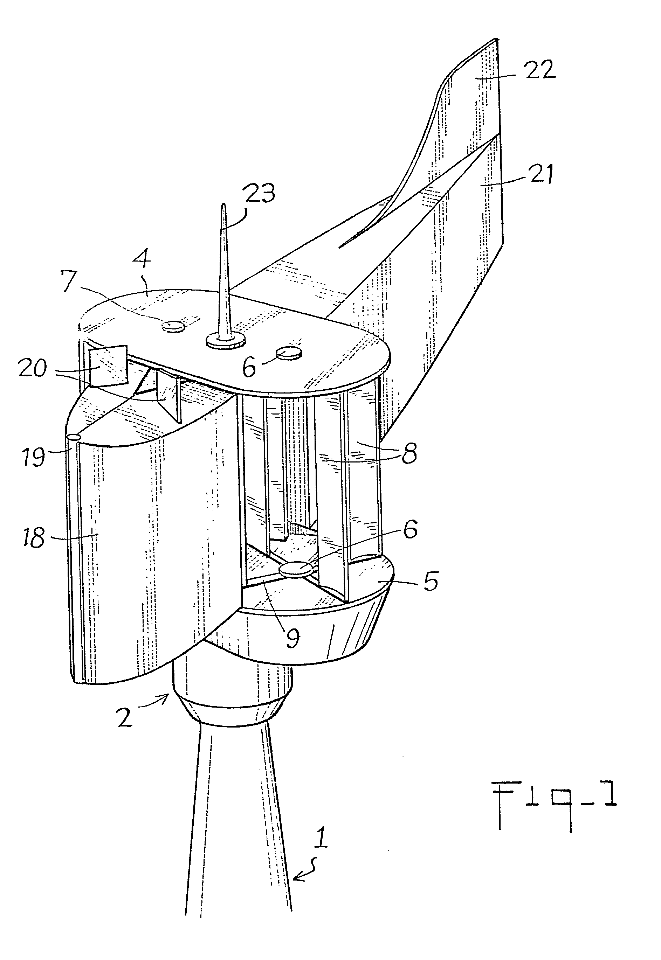

Sur la figure 1, on a représenté schématiquement une vue en perspective de l'aérogénérateur. Cet appareil est monté sur une colonne (ou support) 1 surmontée d'un ensemble permettant une rotation azimutale sur le plateau 2, cet ensemble peut être constitué d'un plateau à roulement conique.

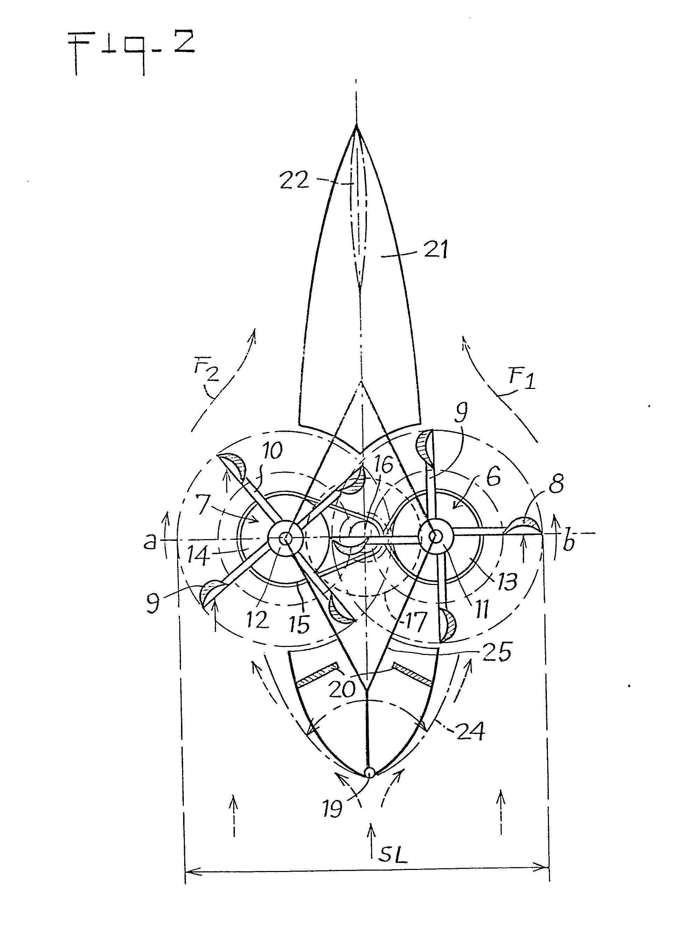

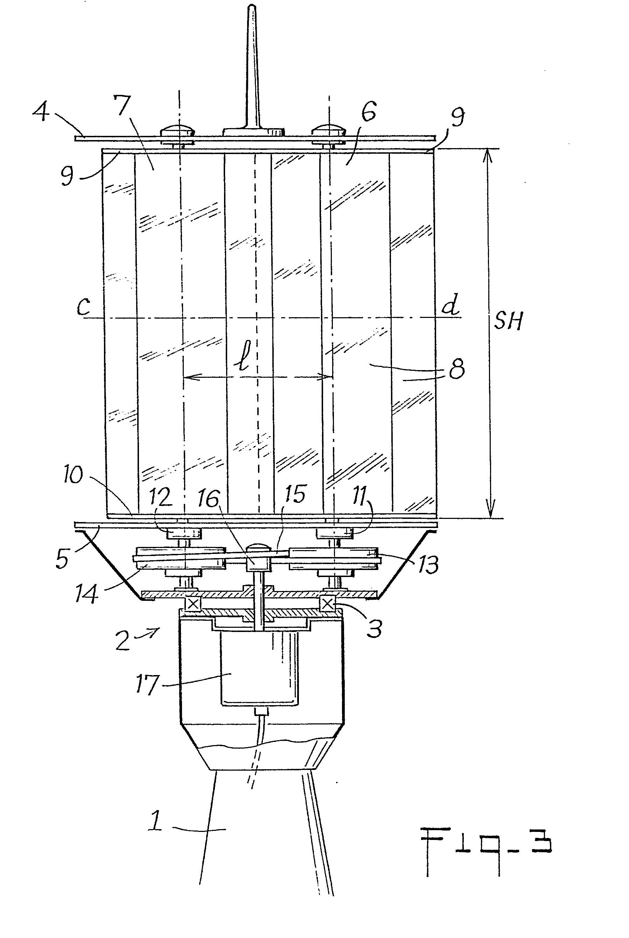

Un ensemble métallique formé de deux plateaux 4 et 5 (figures 1 et 3) porte les rotors 6 et 7. Ces rotors sont constitués chacun de quatre pales profilées 8 qui sont jointes par des entretoises en 9 dans la partie supérieure et en 10 dans la partie inférieure, et ils tournent autour des axes 11 et 12 entraînant les poulies 13 et 14, lesquelles, par l'intermédiaire de la courroie 15, entraînent la poulie 16 fixée sur l'axe de l'alternateur 17 (figures 2 et 3).

Sur la face de l'appareil qui, en fonctionnement, sera face au vent, on a disposé un fuselage profilé 18 qui est formé de deux coquilles symétriques. Ces deux coquilles peuvent s'ouvrir par pivotement autour de l'axe 19; cette ouverture des coquilles peut être commandée automatiquement par des volets 20 convenablement positionnés et dimensionnés pour provoquer cette ouverture à partir d'une certaine vitesse du vent.

La partie arrière de l'appareil est constituée avantageusement par la prolongation, au-delà des rotors, du fuselage profilé sous forme d'un carénage 21 terminé par une dérive 22, cet ensemble contribuant à l'orientation de l'ensemble de l'appareil par rapport au vent et à l'écoulement laminaire des filets d'air sans création de traînée notable.

En 23 est représenté un paratonnerre (figure 1).

En 24 est représenté, en traits mixtes, le profil avant plus ouvert en position de grand vent; dans ce cas, l'ouverture est réalisée par rotation autour de l'axe 19.

Enfin, en 25, on voit le bâti tubulaire tenant les axes et la carrosserie de l'ensemble.

La surface d'entrée du vent (ou surface frontale) d'un tel ensemble est égale à la largeur SL (figure 2) multipliée par la hauteur SH (figure 3).

La masse d'air se déplaçant avec sa vitesse propre selon cette section augmente sa vitesse relative par le déflecteur aérodynamique que forme l'avant du fuselage. Cette masse d'air met en rotation les deux rotors par la poussée aérodynamique sur les pales profilées constituant les montants des rotors et dont le rendement aérodynamique $\frac{cx}{cz}$ est maximal selon l'axe a-b (figure 2).

Ici, le profil peut varier selon l'utilisation de l'éolienne car, en fonction de ce même profil, on peut obtenir des vitesses différentes et des poussées ainsi que des portances également différentes.

Sur l'ensemble dessiné ici et pour obtenir un aérogénérateur de faible prix, sont représentées des pales à simple profil creux doublées d'un profil de pénétration, il est clair, cependant, que les pales peuvent avoir des profils beaucoup plus compliqués, compte tenu de ce que, lors du pivotement des rotors, l'angle d'attaque du vent sur lesdites pales est très variable.

Il est bien évident que la partie avant du fuselage servant à augmenter la vitesse sert en même temps de déflecteur pour les pales qui reviennent à contre-vent, ce qui donne le maximum de poussée aérodynamique sur les ensembles rotors. Cette partie avant du fuselage comporte deux volets, comme on l'a vu en 20 (figure 2), qui, sous la poussée du vent lorsque celui-ci croît par rapport à une vitesse admissible déterminée, ouvrent la partie avant de ce fuselage, ce qui entraîne une beaucoup plus faible action de poussée aérodynamique ainsi qu'un moins bon écoulement de la masse d'air, d'où diminution de l'effort anémométrique sur les pales et suppression de la vitesse d'emballement.

Avec ce système, on peut arriver à une régulation totale de la vitesse de rotation des deux rotors. L'écoulement de la masse d'air qui a traversé l'ensemble rotatif de l'appareil se fait selon le profil terminal du fuselage en créant une zone dépressionnaire, selon les flèches F1 et F2 (figure 2) et augmente encore par dépression la portance des pales (effet Coanda), d'où le rendement aérodynamique élevé de l'ensemble. La dérive ne sert qu'à augmenter avec précision l'effet de rotation azimutale.

L'alternateur étant fixe et son axe situé dans l'axe de rotation de l'ensemble de l'appareil, il n'y a pas besoin ni de collecteur ni de balais, ce qui est un avantage, et le type de multiplicateur de vitesse employé par la courroie crantée est d'un bon rendement. Il est bien évident que l'on peut concevoir tout autre type de pignonnage ou autres pour commander l'alternateur.

Le rendement aérodynamique d'un tel ensemble est très supérieur à tous les systèmes à axe vertical existant actuellement et, par rapport à une éolienne à axe horizontal, le rendement énergétique, c'est-à-dire vitesse du vent-puissance mécanique ou électrique obtenue, est supérieur d'environ 1,3 fois.

A titre d'exemple, les calculs et les essais effectués à ce jour ont permis de voir que pour une section opposée au vent de 16 $m^2$, c'est-à-dire d'un ensemble ayant simplement 4 m de haut et 4 m de large, on obtient pour un vent de 7 m/s une puissance moyenne de 3 000 W pour une vitesse de rotation de 120 tr/min, le rapport de multiplication rotors-alternateur étant de 1 à 4. Le rendement de l'ensemble est d'environ 75% par rapport à la limite de Betz.

Ce type d'aérogénérateur est très robuste, sans aucun entretien et son prix de revient relativement bon marché, car ne faisant appel à aucune technique inconnue ou coûteuse.

La totalité des techniques employées ici appartient à la chaudronnerie courante et peut être réalisée avec des matériaux bon marché, la seule exigence étant une protection (revêtement ou peinture) de haute qualité. L'emploi de plastiques composites peut permettre de fabriquer un appareil de haute tenue et de prix de revient faible où les phénomènes d'usure et de corrosion sont inexistants.

Sur le plan esthétique, ce genre d'aérogénérateur qui se monte aussi bien sur un château d'eau que sur n'importe quel type de colonne ou de construction est particulièrement réussi et il faut ajouter que, grâce à sa faible vitesse de rotation, le bruit engendré par cet ensemble est très faible et de fréquence acoustique très basse, donc faible propagation.

En variante, un rotor ou les rotors peuvent comporter un nombre de pales inférieur ou supérieur à 4 et, ce, jusqu'à ce qu'un phénomène d'ombre aérodynamique intervienne, ce qui diminuerait considérablement le rendement de l'ensemble.

D'autre part, l'élément entraîné par les rotors, et qui dans la description est un alternateur, peut être d'un tout autre type de générateur, tel que : frein calorigène, pompe, ensemble inertiel à volant, etc., l'invention n'étant pas limitée au type de cet élément transformateur d'énergie.

REVENDICATIONS

1 - Aérogénérateur orientable formé de deux rotors à axes parallèles verticaux, tournant en sens inverse et disposés côte à côte, chaque rotor étant constitué de pales périphériques reliées à l'axe de rotation dudit rotor par des bras ou entretoises, lesdites pales étant convenablement profilées et lesdits rotors étant positionnés de façon qu'au cours de la rotation chaque ensemble bras-pale d'un rotor s'intercale entre deux systèmes bras-pales de l'autre rotor, ledit aérogénérateur étant caractérisé en ce que la surface frontale de l'aérogénérateur située au droit des deux axes parallèles des rotors est constituée par un fuselage profilé formé de deux coquilles symétriques ouvrantes.

2 - Aérogénérateur selon la revendication 1, caractérisé en ce qu'il est pourvu dans sa partie opposée à celle portant ledit fuselage profilé d'un carénage muni d'une dérive.

3 - Aérogénérateur selon l'une des revendications 1 et 2, caractérisé en ce que les rotors entraînent en tournant un transformateur d'énergie fixe et situé dans l'axe autour duquel s'oriente ledit aérogénérateur.

0064440

Fig-1

Fig. 2

Fig. 3